# EUROPEAN PATENT SPECIFICATION

(11) **EP 1 230 883 B1**
(45) Date of publication and mention of the grant of the patent: **09.02.2005**
(21) Application number: 01500260.3
(22) Date of filing: 30.10.2001
(51) Int. Cl.: A47J 43/07, A47J 43/06, A47J 43/08

(54) **Improved food mixing and grinding machine**
Verbesserte Küchenmaschine zum Zerkleinern und Mischen von Nahrungsmitteln
Machine améliorée de broyage et de mélange de produits alimentaires

(30) Priority: 05.12.2000 ES 200002996
(43) Date of publication of application: 14.08.2002
(73) Proprietor: Sammic, S.L., 20730 Azpeitia, Guipuzcoa (ES)
(72) Inventor: Cacho Corral, Miguel Angel, 20100 Renteria, Guipuzcoa (ES); Hidalgo Garcia, Javier, 20700 Tolosa, Guipuzcoa (ES)
(74) Representative: Riera Blanco, Juan Carlos

(56) References cited:
- FR-A- 1 357 724
- FR-A- 2 147 495
- GB-A- 1 048 573
- US-A- 5 803 598
- US-A- 5 810 472

## Description

The specification herein refers to a Utility Model application, relating to an improved food mixing and grinding machine, whose main purpose lies in its configuration as a portable electric apparatus, comprising of a motor unit, to which either a grinding rod or a mixing rod for preparing foods can be attached, substituting one rod for another in a totally simplified way.

### FIELD OF THE INVENTION

This invention is relevant within the industry dedicated to the manufacturing of home electrical appliances and, in particular, appliances for the preparation of food products.

### BACKGROUND OF THE INVENTION

On the part of the applicant, it is known that a number of manually operated apparatus exists, i.e. handheld by the user and connected to the electricity supply, which come in the form of a motor unit to which a rod with specific operating characteristics is attached.

The applicant is aware of the existence of this type of machine commonly known as a mixer, which has the motor unit and the rod fixed together and non-detachable, and also motor units to which the rod, with the appropriate blade to be used, is simply connected.

Amongst the documents known by the applicant, the existence of the Patent of Invention published in France with number 1357724 dated 26.02.63 currently in public domain, applied for in the name of M. Joseph Laurent relating to improvements in culinary utensils or similar apparatus, is established

This invention discloses and claims the incorporation of a body with an input motor of an output shaft coupled to a utensil-holding element which incorporates, at the end of the motor output shaft, a cylindrical mounted element, for example, manufactured in plastic, provided with literally opposite radial blades, the utensil-holding body tending, at its end opposite the tool, to incorporate a second element manufactured in plastic, incorporating four grooves, and the motor is elastically suspended within the general body between two elastic bucklers arranged at each end of the motor support.

The Patent of Invention applied for in France with number 7127807 and published with number 2147495, filed on the 29.07.71 in the name of Machines Bertrand, Société anonyme, discloses an electromechanical apparatus which incorporates interchangeable rotational working utensils, which can be adapted to an output shaft of a single power unit and whose apparatus is characterized in that it comprises means of assembling or housing intended for work, adaptable to the power unit and where supports of a rotational element are located, which can enter or be adapted to a plurality of working utensils, whose opposite end permits them to be coupled to a body which can be joined to a rotational element, configured as a power unit output shaft by simple attaching or fastening. Document US- 5 810 472 discloses the preamble of claim 1.

However, the applicant has no knowledge of the existence, at present, of an invention that not only permits the incorporation of means of refrigeration formed by a ventilator which draws in air through the upper grille of the casing and drives the air by means of the rotor through the lower grille, as well as additional elements to form the invention, irrespective of the fact that the context of the invention configured in the previously disclosed inventions have parts applicable for their operation which represent means that implement the action of an object, characterized in that it permits its use using a grinding arm and a mixer, i.e. which has two possibilities, provided with additional elements which generate its proper operation.

### DESCRIPTION OF THE INVENTION

### SPECIFICATION OF THE INVENTION

The improved food mixing and grinding machine which the invention proposes, is in itself an evidently new development within the specific field of application, combining a number of application possibilities, using only and exclusively two rods meant for various uses.

More specifically, the improved food mixing and grinding machine consists of a motor unit, comprising an external casing consisting of two parts meant to protect and, with the help of the motor, support what is referred to as the universal motor, which is fitted in its interior.

The casing has an ergonomic handle to achieve a better grip of the apparatus, and a bell-shaped part is connected to the handle by means of using conventional screws, this part has a thread for a screw by which the motor unit is connected to the grinding or mixing rod.

On the outer part of the apparatus handle, the appropriate buttons to activate the machine are located, and it has a motor axle which, on its lower end has a motor coupling sleeve, by means of which it is connected to a grinding rod, transmitting the power to either a blade which grinds the food to be prepared or to a mixing hoop unit, by which means the food is transformed into mixtures, shakes and creams.

The motor coupling sleeve is connected to the motor axle by means of a pin, being incorporated in the inside of the casing of the aforementioned characteristics an electronic circuit for controlling the machine's functions.

The invention has the means for refrigeration in the form of a motor ventilator, which draws in the air through the upper grille of the casing, driving the air by means of the rotor, at the same time cooling and driving it out through the lower grille of the casing, it being important to point out that the grilles are detachable.

With regard to the rod when used in grinding mode, it must be pointed out that it has a nut for connecting to the arm, and for maximum resistance a metallic insertion has been added which possesses a thread for screwing to the motor unit, forming a block, both the nut and the turbine protector, with the rod.

With regard to the power transmission, it is transmitted by the motor to the male coupling sleeve through the motor coupling sleeve, transmitting the power to the axle of the rod which is connected to the male coupling sleeve by means of a pin.

The axle of the rod is made up of a turbine axle, upper turbine axle and lower turbine axle, which are connected by means of pins, being screwed to the blade support on the lower part of the rod's axle, to which the blade is riveted and when the rod's axle rotates the blade will rotate, mixing the food, the rod's axle being supported on two bearings to improve rotation.

To facilitate the assembly and dismantling of all the interior mechanisms of the rod, a block unit of the same has been made, the upper bearing being supported on the block of the bearing/stop and the lower bearing on the lower closing device of the turbine, in a way which if the blade of the mixing rod, which is screwed to the lower axle of the turbine, is removed, and the lower closing device of the turbine protector is unscrewed, all interior parts of the mixing rod can be removed.

To ensure that the inside of the grinding arm is watertight, it has a V-ring unit, which together with washers, a stop and a cylindrical joint, as well as a blade support having a mechanised screw thread, generate or impede liquids being able to enter into the interior of the grinding arm, thus, as it is watertight, it can be unscrewed from the motor unit for cleaning when necessary, and can also be cleaned in a dishwasher.

The mixer consists of a secondary transmission coupling nut, which has a thread to allow the mixer to be joined to the motor unit, presenting a secondary transmission casing made up of two parts which contain the complete transmission mechanisms and two stirring hoops which are detachable.

The transmission is quite similar to the mechanism incorporated in the grinding rod, in the fact that the motor transmits power to the male coupling sleeve through the motor coupling sleeve.

The motor coupling sleeve then transmits the movement to the secondary transmission axle, to which it is connected by means of a pin, and the latter, by means of cogs, transmits the movement to the axles of the stirring pieces.

It should be highlighted that as the stirring hoops are connected to the axles of the stirrers, they will rotate and therefore convert the food into mixtures, shakes and creams.

The secondary transmission axle rotates supported by bearings and the axles of the stirrers by sintered bushes.

To ensure that the interior of the mixer is watertight, it possesses a set of stops, washers, V-ring and cylindrical joints which also means that as the mixer is watertight it can be unscrewed from the motor unit for cleaning, even in the dishwasher.

The connection between the stirring hoops and the stirring axles is made through a "positioner" which contains a spring and ball, and when the stirring hoops are introduced into the stirring axles, the ball is introduced into the groove of the stirring axle, therefore for the stirring hoops to be separated it is necessary to use traction.

With regard to the stirring hoop it must be pointed out that it consists of two rods of hoops, which are connected on the lower part by a hoop rivet and on the upper part with the outer covering or cap, rod covering and rod cap, and as they are detachable, the stirring axles can be cleaned even in dishwashers.

### DESCRIPTION OF THE DRAWINGS

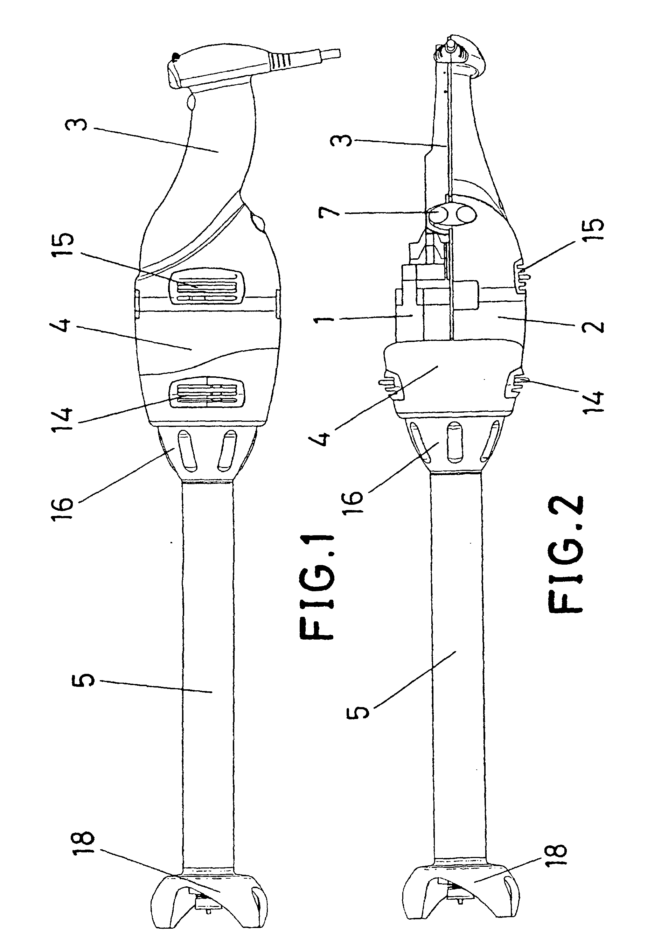

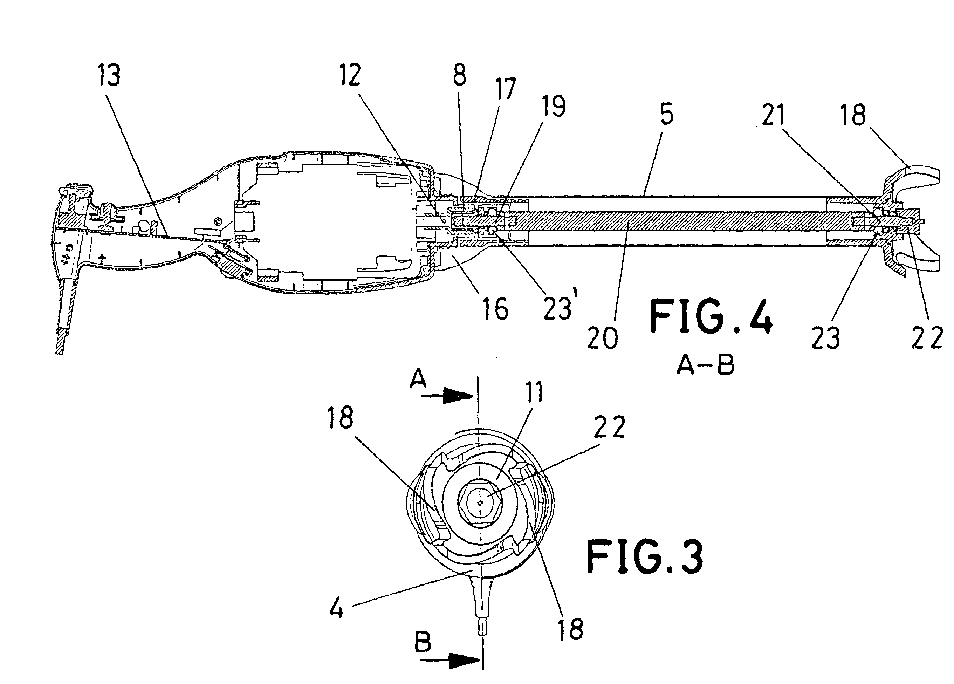

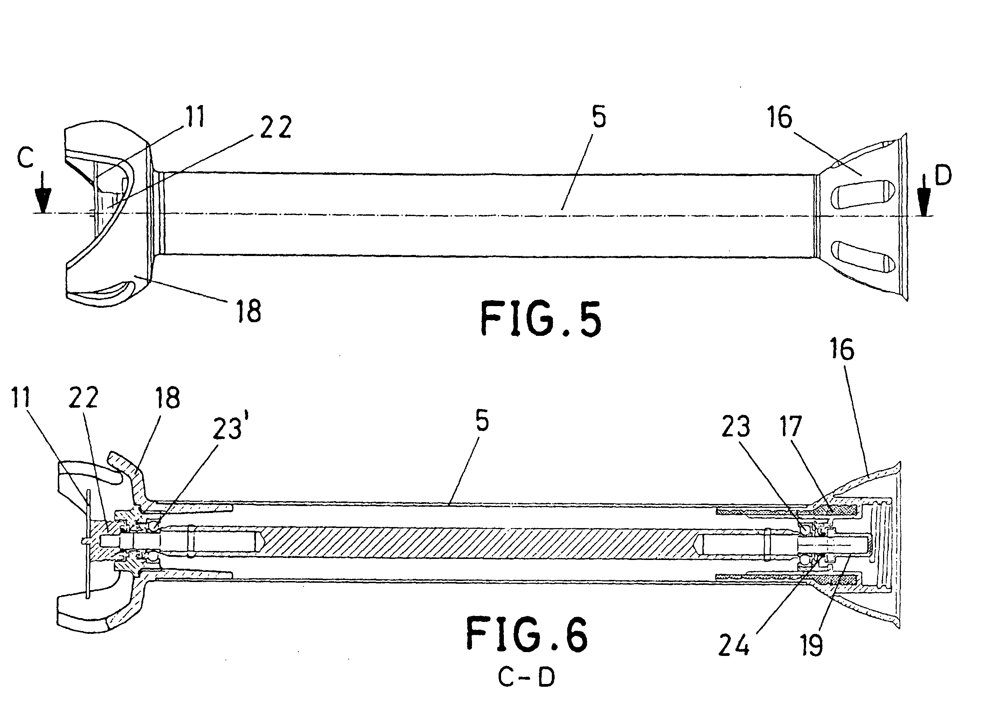

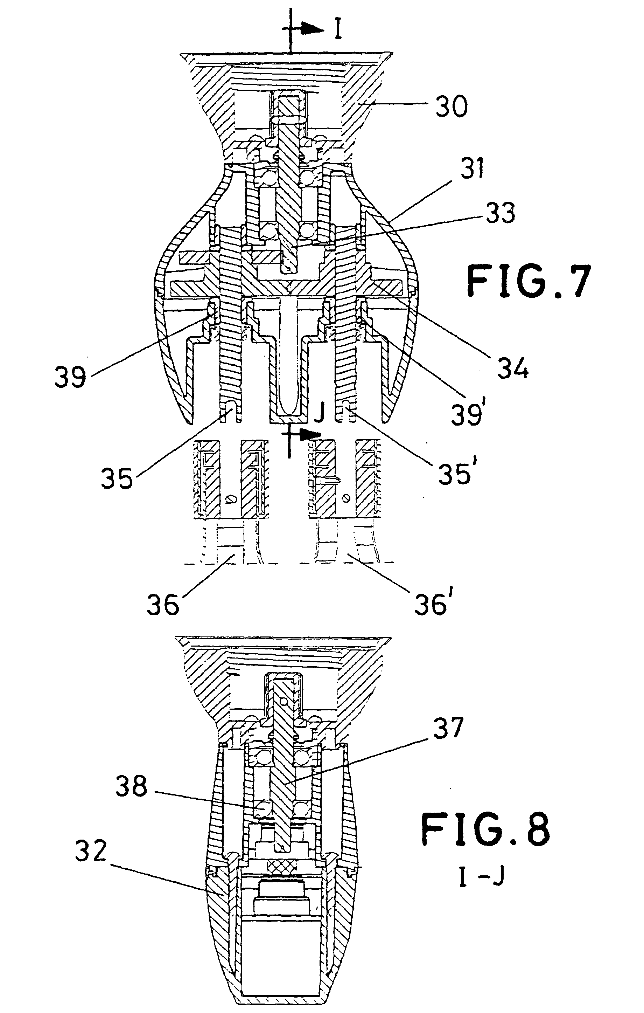

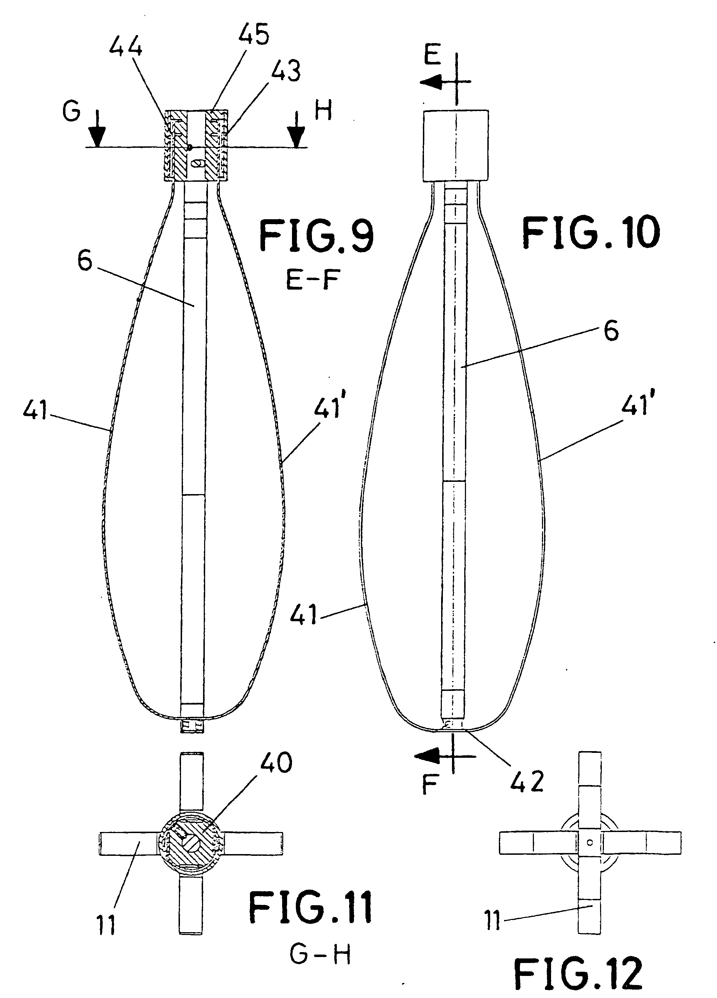

To enhance the description being given and with the aim of offering a greater understanding of the characteristics of the invention, and as an integral part of the specification, it is accompanied by a set of plans, being illustrative and non-restrictive, in which the following is represented:
Figure number 1 - Corresponds to a side-view of the object of the invention, relating to an improved food mixing and grinding machine, with a grinding rod incorporated.
Figure number 2 - Shows another side-view of the object represented in Figure number 1, highlighting the area not seen in the graphic representation of Figure number 1.
Figure number 3 - Corresponds to a plan view of the lower area of the object represented in Figures 1 and 2.
Figure number 4 - Shows a view from A-B of the object represented in Figure 3.
Figure number 5 - Corresponds to a view of the grinding rod.
Figure number 6 - Represents a view from C-D of the object shown in figure number 5.
Figure number 7 - Corresponds to a section view of the sub-unit of the secondary transmission.
Figure number 8 - Represents a view from I-J of the object shown in Figure number 7.
Figure number 9 - Represents a view from E-F of the object shown in Figure number 10.
Figure number 10 - Corresponds to a view of the mixing rod.
Figure number 11 - Represents a plan view of the partially sectioned grinding blade.
Figure number 12 - Shows a view of the object represented in Figure number 11 seen from the opposite side.

### PREFERRED EMBODIMENT OF THE INVENTION

In the light of these Figures, one can observe how the improved food mixing and grinding machine consists of a motor unit, made up of an outer casing consisting of two parts (1) and (2) which protect and hold together the universal motor fitted in its interior.

The casing has an ergonomically styled handle (3) to allow a better grasp of the apparatus.

To the casing made up of two parts (1) and (2) in the area of the handle (3) a bell-shaped part (4)is attached which has a thread for a screw to connect with the grinding rod or the mixer, numbered (5) and (6) respectively.

On the outer part of the handle (3) the buttons (7) for activating the machine for grinding and mixing are located, the motor axle having a sleeve (6) for connection to the grinding rod (5), through which it either transmits the power to a blade (11) which has the function of grinding the food or to a mixing hoop unit (6), with which mixtures, shakes and creams are made.

The motor coupling sleeve (8) is joined to the motor axle by means of a pin (12), where it must be highlighted that an electronic circuit (13) which controls the workings of the apparatus is incorporated in the interior of the casing.

The invention also has means for refrigeration consisting of a motor ventilator which draws in air through the upper grille (14) of the casing made up of parts (1) and (2), and by means of the rotor cooling it and driving it through the lower ventilation grille (15) of the aforementioned casing, it being important to point out that the grilles (14) and (15) are detachable, to ensure that the invention complies with hygiene standards.

With regard to the grinding rod (5) it must be taken into account that it has a coupling nut (16) to which a metallic insertion (17) has been added having the appropriate thread for screwing to the motor unit, both the nut (17) and the turbine protector (18), forming a block with the rod (5).

With regard to power transmission, the motor transmits to the male coupling sleeve (19) through the motor coupling sleeve (8), transmitting the power to the axle (20) and thus, in turn to the parts (19) and (21), which are in turn joined by pins.

On the lower part of the rod axle (20), the blade support (22) is located, to which the blade is riveted (11), and when the rod axle (20) is rotated, it is supported between two bearings (23 and (23').

To facilitate the assembly and dismantling of all the interior mechanisms of the rod (5), a block containing all its components has been made, in such a way that once the grinding rod is removed from the support unit, the blade (11) can be extracted.

To ensure that the interior of the grinding arm (5) is watertight, it has a V-ring unit (24), which together with washers, a stop and a cylindrical joint, as well as the blade support impede liquids from entering the interior of the grinding arm (5), and consequently as it is watertight, the grinding arm can be unscrewed from the motor unit for cleaning even in dishwashers.

The mixing arm (6) consists of a coupling nut (30) of the secondary transmission which has a thread, by which the mixer is screwed to the motor unit, also having a secondary transmission casing made up of two parts (31) and (32), these two parts being made suitable for containing all the transmission mechanisms, as well as two detachable stirring hoops (6).

Transmission is practically the same as with the grinding arm (5), in that the motor transmits the power to the male coupling sleeve by means of the motor coupling sleeve, at the same time transmitting to the secondary transmission axle, to which it is joined by a pin, and this in turn joined by means of cogs (33) and (34) to the stirring axles (35) and (35').

As the stirring blades (36) and (36') are joined to the stirring axles (35) and (35'), they rotate and therefore obtain the required mixtures, shakes or creams, highlighting that the secondary transmission axle (37) rotates supported by bearings (38) and the stirring axles (35) and (35') by sintered bushes (39) and (39').

To ensure that the interior of the mixer (6) is watertight, there are stops, washers, a V-ring and cylindrical joints which allow the mixing unit (6) to be unscrewed from the motor unit formed by parts (1) and (2) to enable the unit to be cleaned even in a dishwasher.

The connection between the stirring hoops and the stirring axles is made by means of a "positioner" (40) which has a spring and ball, and when the stirring hoops are introduced into the stirring axles, the ball is introduced into the groove located in the stirring axle, thus for the stirring hoops to be separated it is necessary to use traction.

By referring to Figures 9 and 10, one can observe that the mixer has hoops (41) and (41') connected to the lower part (42), the upper part having a bush (43), a sleeve (44) and a bush (45) where the central rod is joined (6).

As in the aforementioned cases, the stirring axles are detachable.

## Claims

1. Improved food mixing and grinding machine of those based on a motor unit comprising an external casing, to which a grinding arm or mixer can be attached for preparing food, the motor axle having a motor coupling sleeve (8) on its lower end for connecting to the grinding arm (5), and the coupling sleeve (8) being joined to the motor axle by means of a pin (12), an electronic circuit (13) being incorporated inside the casing, the machine being equipped with means for refrigeration consisting of a motor ventilator that draws in air through an upper grille of the casing made up of two parts (1) and (2) and drives air through a lower grille (15) of the casing, **characterised by** both grilles (14) and (15) being detachable.

## Patentansprüche

1. Eine verbesserte Nahrungs-Mix- und Nahrungs-Zerkleinerungs-Maschine, eine von denen, die auf einem Motorantrieb basiert und ein Außengehäuse umfasst, an der ein Zerkleinerungsarm oder ein Mixer zur Zubereitung von Nahrung angebracht werden kann, wobei die Motorachse an ihrem unteren Ende eine Motor-Verbindungsmuffe (8) zur Verbindung mit dem Zerkleinerungsarm (5) besitzt und die Verbindungsmuffe (8) mittels eines Stifts (12) mit der Motorachse verbunden ist, wobei ein Stromkreis (13) im Innern des Gehäuses eingebaut ist, diese mit einer Kühleinrichtung ausgestattet ist, die aus einem Lüftersatz besteht, der durch einen oberen Kühlergrill des Gehäuses, das aus den beiden Teilen (1) und (2) hergestellt ist, Luft einzieht und über einen unteren Kühlergrill (15) des Gehäuses Luft hinaus befördert, **dadurch gekennzeichnet, dass** beide Kühlergrills (14) und (15) abnehmbar sind.

## Revendications

1. Mélangeuse d'aliments et rectifieuse améliorée de type basé sur un bloc moteur comprenant une enveloppe externe à laquelle un bras servant à rectifier ou un mélangeur peut être monté pour préparer des aliments, la machine étant dotée de moyens de refroidissement consistant en un ventilateur à moteur qui aspire de l'air à travers une grille supérieure de l'enveloppe faite de deux éléments (1) et (2) et conduit l'air à travers une grille inférieure (15) de l'enveloppe, **caractérisée en ce que** les deux grilles (14) et (15) étant détachables, l'axe du moteur étant doté d'un manchon d'accouplement moteur (8) au niveau de son extrémité inférieure qui se relie au bras de la rectifieuse (5), et le manchon d'accouplement (8) étant unit à l'axe du moteur au moyen d'une broche (12), un circuit électronique (13)étant incorporé à l'enveloppe.
